# EUROPEAN PATENT APPLICATION

(11) **EP 1 179 299 A2**
(43) Date of publication of application: **13.02.2002**
(21) Application number: 01306688.1
(22) Date of filing: 03.08.2001
(51) Int. Cl.: A23L 1/0528, C08B 37/00

(54) **Non-bitter chicory extract**

(30) Priority: 11.08.2000 GB 0019867
(71) Applicant: SOCIETE DES PRODUITS NESTLE S.A., 1800 Vevey (CH)
(72) Inventor: Crelier, Simon, 8542 Wiesendangen ZH (CH)
(74) Representative: Marchant, James Ian

(57) **Abstract**

The present invention relates to processes for the production of a non-bitter chicory extract comprising subjecting an aqueous chicory extract to UV treatment and alkaline treatment or subjecting an aqueous chicory extract with a pH of below 7 to a UV treatment. The present invention also relates to a further process for the preparation of a non-bitter chicory extract comprising subjecting an aqueous chicory extract to ethanol precipitation, separating the precipitate by filtration and drying the precipitate.

## Description

The present invention relates to a chicory extract, and in particular to a process for the production of a non-bitter chicory extract.

There is now a growing market interest for products rich in inulin. Inulin or fructo-oligo-saccharides (FOS) are storage carbohydrates that occur naturally in many edible plants. Due to β-2,1 glycosidic bonds inulin is not hydrolysed by enzymes in human saliva, the small intestine or in the stomach. However, inulin is hydrolysed and metabolised in the colon by the microbial flora therein, mainly the bifidobacteria, and hence has a valuable prebiotic effect.

Chicory roots (Cichorium intybus L.) have a high inulin content (up to 65-70 % of root dry matter) and are thus a very interesting functional ingredient in a variety of food products. This compound can also be used as a fat substitute, a mouthfeel/texture enhancer or emulsion stabiliser in such food products. To date the direct use of chicory powder or chicory extracts, to take advantage of the high inulin content, has been limited because of co-extracted bitter compounds that give the raw material a very low palatability and bitter taste, making it difficult to use in human food products. Sesquiterpene lactones are responsible for the chicory bitterness and include lactucin (C₁₅H₁₆O₅), 8-deoxylactucin (C₁₅H₁₆O₄), and lactucopicrin (C₂₃H₂₂O₇). They exist under both free and bound (glycosylated) forms in the vegetable.

Various methods to isolate non-bitter chicory extracts or the bitter compounds themselves have been described. RO-94337 is directed to the preparation of a chicory free of bitter taste by the cold water extraction of chicory roots. FR-2474830 is directed to the removal of bitter compounds from roasted products such as chicory. However, the compounds responsible for bitterness in roasted chicory are not sesquiterpene lactones but new bitter compounds generated during roasting. CS-235152 is directed to a process involving the acidification and heating of chicory roots to isolate the bitter compounds from the chicory roots. Leclerq E. et al (1988) Z. Lebensm. Unters. Forsch. 187:440-443 studied the impact of various treatments, such as pH, daylight and enzymes, on the solubility and stability of chicory sesquiterpene lactones. In this study chicory extracts were studied under daylight for 6 days from pH 1-10. A shift in HPLC peaks was observed for lactucin, 8-deoxylactucin and lactucopicrin which was due to the addition of water. No studies were carried out on the impact of these parameters on the bitterness of the compounds.

Schenck et al (1963) Naturwissenschaften 50:734 studied the effect of UV and visible light on lactucin derived from Lactuca virosa and found that lactucin was degraded by UV and visible light. However, 8-deoxylactucin and the glycosylated forms of the sesquiterpene lactones were not known at this time and no reference was made concerning the impact of these treatments on the bitterness of the extracts.

None of these methods studied the effects on the inulin content of the chicory extract, and in most cases loss of inulin would have resulted. An object of the present invention is to broaden the application of chicory by improving the palatability and reducing the bitterness of chicory extracts high in inulin. All the methods according to the invention involve the removal or degradation of glycosylated (bound) and free sesquiterpene lactones which are responsible for the bitterness from raw chicory extracts whilst preserving the high inulin/FOS content and quality of the extracts.

Raw, liquid chicory extracts are used in the present invention. Such extracts are well known in the art and may be obtained from chicory roots by cutting, blanching and crushing the roots followed by an aqueous extraction procedure.

According to one aspect of the present invention there is provided a process for the production of a non-bitter chicory extract which comprises subjecting an aqueous chicory extract to UV treatment and alkaline treatment. Such UV and alkaline treatment of chicory extracts results in the degradation of the sesquiterpene lactones whilst the inulin content and FOS profile are not affected. The UV and alkaline treatment may be carried out at the same time or may occur sequentially.

More efficient degradation of sesquiterpene lactones occurs at higher pH during UV treatment. UV treatment may be carried out by raising the pH above 7, preferably to about pH 10 to 12. Preferably, the temperature does not exceed about 40 to 55°C, preferably for a duration of 30 to 60 minutes. This method enables short treatment times and/or less harsh processing conditions to be used. The UV and alkaline treatments may be carried out at the same time.

According to a further aspect of the invention there is provided a process for the production of a non-bitter chicory extract which comprises subjecting an aqueous chicory extract to UV treatment. UV treatment of chicory extracts results in the degradation of the sesquiterpene lactones whilst the inulin content and FOS profile are not influenced by UV treatment. UV treatment may occur at a pH below 7, preferably at about pH 5.0 to 6.5 and 50% degradation was observed after 15 minutes of such UV treatment. Most preferably, UV treatment occurs at pH 5.7 and about 70°C for at least 60 minutes. This results in more than 80% of the sesquiterpenes being degraded.

According to a further aspect of the invention there is provided a process for the production of a non-bitter chicory extract which comprises subjecting an aqueous chicory extract to an alkaline treatment. Such treatment involves raising the pH of the chicory extract to an alkaline pH, preferably to a pH greater than 10, at a temperature of 0 to 75°C for a time of 15 to 90 minutes. Most preferably alkaline treatment occurs at a pH of about 10 to 12. The glycoside of lactucin which is the major contributor to bitterness, has been found to be very sensitive to alkaline treatment whilst the inulin content and the FOS profile are not significantly influenced by the alkaline treatment. Preferably the process involves an alkaline pH of about 12 for about 30 min at about 40 °C. Alkaline treatment of the chicory extract is greatly accelerated at the higher pH, and 94% of the total sesquiterpene lactones were degraded after 30 minutes at pH 12 and 40 °C. Greater than 99% for lactucin and lactucopicrin and 89 % for 8-deoxylactucin were degraded by this alkaline treatment. HPLC analysis showed an almost complete disappearance of the sesquiterpene lactones and this was confirmed by tasting the corresponding samples, where no bitterness was detected. Inulin and FOS contents were not affected by treatment of up to 120 minutes at pH 12 and 70°C. At pH 10 and 70 °C, 25 % degradation of the sesquiterpene lactones was achieved after 30 min and over 60 % degradation was achieved after 60 min.

According to a further aspect of the present invention there is provided a process for the preparation of a non-bitter chicory extract from an aqueous chicory extract which comprises subjecting the extract to ethanol precipitation followed by filtration and drying of the precipitate. Ethanol precipitation comprises the addition of ethanol to the raw extract followed by the filtration and washing of the cake. The solubility of many sugars, oligo and polysaccharides are known to be significantly decreased in the presence of organic solvents such as ethanol. Ethanol precipitation is thus an efficient method to produce bitter-free inulin powder from a raw chicory extract. This process has the advantage that it is both simple and has high recovery yields.

According to a further aspect of the present invention there is provided a chicory extract obtainable by ethanol precipitation wherein inulin represents greater than 92% by weight of the dry matter.

Ethanol precipitation takes place after the steps of washing/screening of the chicory roots, rasping, dicing or crushing, blanching or steaming, hot extraction (by pressing, maceration or crushing), separation of solid and liquid fractions and cooling of the extract. Preferably the chicory extracts are precipitated at a final ethanol (EtOH) concentration of 40 to 80% v/v aqueous ethanol. The amount of inulin powder that is obtained increases with ethanol concentration. At 80% v/v aqueous EtOH, precipitation allows the recovery of more than 80% of the total dry matter in the sample with a reduction of 92% in the total sesquiterpene lactones present. Precipitation with 40 % v/v aqueous EtOH resulted in a reduction of 80 % in the total sesquiterpene lactones present.

Ethanol is a food grade-solvent and the high ethanol content and low temperature in the precipitation mixture also helps prevent microbial contamination of the final product. Use of ice-cold ethanol has the advantage that all steps would be carried out below solvent flashpoint.

The invention will now be described in more detail with reference to the following non-limiting examples:

### Examples:

### Preparative experiment for obtaining a raw liquid chicory extract :

75 kg of fresh, washed chicory roots of the Faste variety (COV official name) were obtained and kept at 5 °C in a cold room until processing. Extraction was performed in one batch (75 kg roots processed with 75 kg water) and included the steps of cutting, blanching, crushing, extraction, clarification, sterilisation and conditioning. 75kg of chicory roots were cut and 75kg of water at 80°C was added and the chicory roots were heated up to 80°C and subsequently cooled down to 75°C. The blanched roots were then crushed in a colloidal mill and transferred into a storage vessel where extraction was undergone. The liquid extract and solid residue were obtained by pumping the crushed roots through a horizontal separator. Clarification was performed after maturation of the puree in the storage vessel. The extract obtained then underwent UHT treatment to form a liquid chicory extract.

### Alkaline treatment of Chicory Extracts

### Example 1a :

pH in the raw, liquid chicory extract obtained in accordance with the preparation was raised to pH 12.0 with conc. NaOH, and kept at 40°C for 4 hours under stirring. The mixture was cooled down to ambient temperature prior to pH adjusting and tasting. The pH was adjusted back to its initial value of 5.7 with conc. HCl. A tasting, later confirmed by HPLC analysis, showed an almost complete disappearance of bitterness and sesquiterpene lactones.

### Example 1b:

The liquid chicory extract obtained in accordance with the preparation was treated at two different pH levels (10.0 and 12.0) and two different temperatures (40 and 70°C). During these experiments samples were taken after 30, 60, 90 and 120 minutes treatment.

The inulin/sugar profiles were determined using a chromatographic technique (HPAE-PAD chromatography). It was found that the inulin content and FOS profile was not significantly influenced by the alkaline treatment. It remained high at all temperatures and treatment times. However, the sesquiterpene lactones were found to be very sensitive to alkaline pH treatments.

At pH 10 and 40 °C, no significant degradation occurred over a 2 h treatment. At 70 °C 25 % degradation was achieved after 30 min and over 60 % degradation (determined by HPLC analysis) was achieved after 60 min. Upon tasting, a slight bitterness could still be detected in the sample treated at pH 10/70 °C for 90 min, where 65 % of the sesquiterpene lactones had been degraded. The process was greatly accelerated at a higher pH, and 94% of the total sesquiterpene lactones were degraded after 30 minutes at pH 12 and 40 °C. The degradation figures for each sesquiterpene lactone are >99% for lactucin and lactucopicrin and 89 % for 8-deoxylactucin at pH 12. pH 12 for 30 min at 40 °C seem sufficient to obtain the maximal impact. Higher temperatures and longer processing times did not lead to much additional degradation.

### UV treatment of Chicory Extract

### Example 2a :

400 g of raw liquid chicory extract obtained in accordance with the preparation were poured into a Petri dish (185 mm diam.) and placed on the bottom of a box lined with aluminium foil (for improved reflection). The sample was irradiated overnight (18 h) at 4 °C, with two UV light tubes (2x4 Watt UV-C, at 254 mm wavelength). The treated sample was tasted and only a hint of bitterness could be detected compared to the strong bitterness in the control, untreated sample. HPLC analysis of the sesquiterpene lactones showed > 85% degradation of these bitter substances.

### Example 2b:

A photoreactor with concentric cylinders containing (from the outside towards the inner cylinder) the liquid extract to be treated, a circulation of cooling liquid and the UV lamp (a 400 W medium pressure mercury (Hg) vapour lamp). It emits light on a low background continuum with several very intense bands at 254, 366, 436, 546 nm.

The raw liquid chicory extract obtained in accordance with the preparation was treated at 70 °C and two different pH values, pH 5.7 and 10.0. Samples were taken after 15, 30 and 60 minutes treatment.

The inulin content and FOS profile were not significant influenced by the UV treatment at pH 5.7 (chicory extract "natural" pH) and 70 °C. It remained high whatever the treatment duration.

The bitter compounds in chicory were found to be sensitive to UV light. At pH 5.7 50 % degradation of the sesquiterpene lactones was observed, after 15 minutes treatment. After 60 minutes at the same pH, more than 80% of the sesquiterpenes had been degraded.

### Example 4 : Alkaline and UV treatment

The raw liquid chicory extract obtained in accordance with the preparation was subjected to UV treatment at an alkaline pH of 10 to 12 for a duration of 30 to 60 minutes. The temperature did not exceed 40 to 55°C. The inulin and FOS content was not affected by this treatment and efficient degradation of the sesquiterpene lactones was obtained.

The disappearance of the sesquiterpene lactones was accelerated when performing the UV treatment under alkaline conditions, such as pH 10. More than 85% of the total sesquiterpene lactones had disappeared after 60 minutes treatment at pH 10, where >85% lactucin, 63% 8-deoxylactucin and >94% lactucopicrin were degraded.

### Example 5 : Ethanol precipitation of Chicory Extract

The raw liquid chicory extract obtained in accordance with the preparation was heated to 70°C in order to dissolve as much of the sediment as possible. The mixture was then homogenised with a Polytron head (2 min at 10,000 rpm). 100g aliquots were then added to various amounts of cold 94% ethanol (EtOH). The mixtures were shaken for 1 hour while cooling gently to 5°C and then left standing for 3 hours. The control sample (0% ethanol) was centrifuged, and all other samples were then filtered under vacuum on a Büchner and the filtration cake was washed with a few ml of ice-cold ethanol. The filtration cakes where then placed on a Petri dish and dried overnight at 75°C.

The extraction process resulted in a turbid chicory extract where inulin represented approximately 90 % of the dry matter. It was found that the inulin content remains stable during the whole extraction process, confirming the processing conditions were mild enough not to degrade inulin to a significant extent. The inulin "purity" was not significantly influenced by the ethanol precipitation, although it seemed to increase slightly with EtOH concentration. The FOS profile on the other hand was influenced in a more perceivable way by the treatment. Short chains with low degree of polymerisation (DP) values remained in solution while larger molecules were precipitated. This can be seen for kestose, nystose and fructosyl-nystose (except for the latter at 80 % EtOH), which content in the precipitate keeps decreasing with increasing ethanol concentration.

**Table 1:**

| Inulin content and FOS profile after treatment with different ethanol concentrations | | | | |
|---|---|---|---|---|
| Sample | Inulin [%] | Kestose [%] | Nystose [%] | Fruct.-Nystose [%] |
| Control | 92.3 | 0.52 | 0.47 | 0.68 |
| 40%EtOH | 93.6 | 0.15 | 0.13 | 0.20 |
| 80% EtOH | 94.5 | 0.12 | 0.17 | 0.37 |

As can be seen from Table 2 below, the amount of powder that is obtained increases with ethanol concentration. At 80% EtOH, precipitation allows the recovery of more than 80% of the total dry matter in the sample.

**Table 2:**

| Recovery yield of chicory extract after precipitation with ethanol | | | | | |
|---|---|---|---|---|---|
| Sample | Extract [g] | EtOH 94% [g] | [EtOH] [%] | Precipitate [g] | Yield [%] |
| Control | 100.0 | 0.0 | 0.0 | 3.51 | 28 |
| 1 | 100.0 | 27.0 | 20.0 | 7.54 | 60 |
| 2 | 100.0 | 74.1 | 40.0 | 8.23 | 66 |
| 3 | 100.0 | 176.5 | 60.0 | 9.71 | 78 |
| 5 | 100.0 | 571.4 | 80.0 | 10.55 | 84 |

When tasting the different powders (dissolved in water at a conc. of 2.5%) a significant bitterness was detected in the control sample, whereas the 60% EtOH sample had a very bland and neutral taste. This was confirmed by the chromatographic analysis of the sesquiterpene lactones, where 92 % of the total sesquiterpene lactones had disappeared in the 80 % EtOH sample. Taken individually, the removal amounted to 92 % for lactucin, 89 % for 8-deoxylactucin and 96 % for lactucopicrin. The sample precipitated with 40 % EtOH globally contained 80 % less sesquiterpene lactones than the control.

## Claims

1. A process for the production of a non-bitter chicory extract which comprises subjecting an aqueous chicory extract to UV treatment and alkaline treatment.

2. A process as claimed in claim 1 wherein the alkaline treatment comprises raising the pH above 7.

3. A process as claimed in claim 1 or 2 wherein the alkaline treatment comprises raising the pH to about 10 to 12.

4. A process as claimed in any of claims 1 to 3 wherein the temperature is maintained at about 40 to 55°C.

5. A process as claimed in any of claims 1 to 4 wherein the UV and alkaline treatments are carried out at the same time.

6. A process for the production of a non-bitter chicory extract which comprises subjecting an aqueous chicory extract to a UV treatment wherein the aqueous chicory extract has a pH of below 7.

7. A process as claimed in claim 6 wherein the aqueous chicory extract has a pH of about 5.0 to 6.5.

8. A process as claimed in claim 6 or 7 wherein the temperature is maintained at about 70°C.

9. A process for the preparation of a non-bitter chicory extract which comprises subjecting an aqueous chicory extract to ethanol precipitation, separating the precipitate by filtration and drying the precipitate.

10. A process as claimed in claim 9 wherein the extract is subjected to 40 to 80% v/v aqueous ethanol.

11. A chicory extract obtainable by a process according to claim 9 or 10 wherein inulin represents greater than 92% by weight of the dry matter.
